Europäisches Patentamt

European Patent Office

Office européen des brevets

(11) Veröffentlichungsnummer: **0 442 279 A1**

# (12) EUROPÄISCHE PATENTANMELDUNG

(21) Anmeldenummer: 91100573.4

(22) Anmeldetag: 18.01.91

(51) Int. Cl.⁵: **A01B 63/111,** G05G 11/00, G05G 7/10, B62D 49/02

(30) Priorität: **19.01.90 DE 4001400**

(43) Veröffentlichungstag der Anmeldung:
**21.08.91 Patentblatt 91/34**

(84) Benannte Vertragsstaaten:
**BE DE ES FR GB**

(71) Anmelder: **Klöckner-Humboldt-Deutz**

Aktiengesellschaft
**Deutz-Mülheimer-Strasse 111 Postfach 80 05
09
W-5000 Köln 80(DE)**

(72) Erfinder: **Köster, Hermann
An der Wielermaar 20
W-5000 Köln 90(DE)**

(54) **Fernbetätigung eines regelhydraulischen Krafthebers für Traktoren.**

㊛ Die Erfindung betrifft eine Fernbetätigung für den Kraftheber an Fahrzeugen, insbesondere Traktoren, die am Fahrzeugheck angebracht ist, wobei die ausschließlich in der Lageregelung befindliche Regelventilanordnung (2) über den Handhebel (9) schaltbar ist.

Der Erfindung liegt die Aufgabe zugrunde, den Kraftheber über die Fernbetätigung lediglich schrittweise zu betätigen, unter Einhaltung von Grenzwerten.

Erfindungsgemäß wird dies dadurch gelöst, daß die Fernbetätigung, der Handhebel (9) mit dem Taster (26) innerhalb der Begrenzung (17) bewegbar ist und über den Taster (26) ein Hubmagnet (12) beaufschlagbar ist zur schrittweisen Verdrehung der Stellwelle (15).

Fig.1

Die Erfindung betrifft eine Vorrichtung, mit der ein in Fahrzeugen eingesetzter Kraftheber betätigbar ist, der eine Regelventilanordnung besitzt, die neben einer in unmittelbarer Nähe der Fahrersitzanordnung befindlichen Betätigung zusätzlich eine weitere Fernbetätigung vorsieht.

Der heutige Entwicklungsstand sieht bei Traktoren eine mechanisch-hydraulische Kraftheberregelung vor, die in verschiedenen Regelungsarten betrieben werden kann, wie z.B. Zugkraft-, Lage- oder Mischregelung. Beim Einsatz des Traktors für die Bodenbearbeitung, z.B. Pflügen, wird vorwiegend der Kraftheber auf eine ausschließliche Zugkraftregelung eingestellt, wobei dies über einen sogenannten Systemwahlhebel geschieht. Die Pflugtiefe, die im wesentlichen die Zugkraft bestimmt, wird über den Sollwerthebel vorgegeben. Zur Vereinfachung des Ankoppelns der Geräte an die Dreipunkt-Kupplung des Krafthebers hat sich eine heute an vielen Trakoren eingesetzte Fernbetätigung bewährt. Dazu ist am Traktorheck ein zweiter Sollwerthebel angeordnet, und zwar so, daß die Bedienungsperson sich nicht zwischen dem Traktor und dem anzukoppelnden Gerät aufhalten und damit ein besserer Unfallschutz erreicht wird.

Diese bekannten Fernbetätigungen besitzen ein Sicherheitsproblem, das darin besteht, daß bei Vorwahl der Regelungsart Zugkraft die Dreipunkt-Kupplung beim Überfahren eines bestimmten Sollwertes durch den Sollwerthebel an der Fahrersitzanordnung bzw. durch die Fernbetätigung wegen ausbleibender Istwert-Angleichung durch den oder die Meßwertgeber den Hubvorgang bis zur Endstellung durchführt. Bei der Mischregelung kann es dazu kommen, daß je nach Mischungsanteil zwar ein begrenzter Hubvorgang ausgeführt wird, der jedoch in seiner Größe nicht abschätzbar ist. Aufgrund dieser Unwägsamkeiten besteht eine permanente Unfallgefahr, wenn sich die Bedienungsperson entgegen der Bedienungsanleitung bzw. Warnschilder am Traktorheck beim Ankuppeln des Geräts im Bereich zwischen dem Gerät und dem Traktor aufhält.

Aus der DE-PS 3318114 ist eine Vorrichtung bekannt zur Fernbetätigung eines hydraulischen Krafthebers für Traktoren, mit der dieser ausschließlich bei vorgewählter Lageregelung betätigbar ist. Weiter ist vorgesehen, daß über die Fernbetätigung nur ein begrenzter Hubbereich des Krafthebers ausgeübt werden kann, was nachteilig ist, da der Ankupplungsbereich und damit die Anbauhöhe zwischen den einzelnen Geräten nicht standardisiert und gegenteilig sehr schwankend ist und demzufolge die bekannte Fernbetätigung als praxisfremd bezeichnet werden kann. Weiter zeigt die Vorrichtung auch keinerlei Maßnahmen zur Darstellung einer schrittweisen, getakteten Hubbewegung.

Der Erfindung liegt die Aufgabe zugrunde, die Nachteile aus dem bekannten Stand der Technik zu vermeiden und darüber hinaus eine bedienungsfreundliche Fernbetätigung darzustellen, die neben einem einfachen und platzsparenden Aufbau eine wirkungsvolle schrittweise Fernbetätigung des Krafthebers über dessen gesamte Hubhöhe darzustellen.

Die Aufgabe wird gelöst durch die kennzeichnenden Merkmale des Anspruchs 1. Die erfindungsgemäße Fernbetätigung sieht einen vorteilhaft am Heck des Ackerschleppers schwenkbar gelagerten Handhebel vor zur Betätigung des hydraulischen Krafthebers. Zur Übertragung der Schwenkbewegung des Handhebels auf die Sollwertverstellung des Krafthebers ist erfindungsgemäß eine Servoeinrichtung vorgesehen, durch die mittels einer Kuppeleinrichtung ein wahlweises Verbinden der Fernbetätigung mit den Übertragungsgliedern des Sollwerthebels möglich ist. Gleichfalls besteht eine Verbindung zwischen dem Handhebel und dem Systemwahlhebel, wodurch sichergestellt ist, daß über den Handhebel eine Sollwertverstellung nur möglich ist, wenn sich der Systemwahlhebel in der Lageposition befindet. Vorteilhaft wird durch diese Schaltung erreicht, daß selbst bei einer Unterlassung einer Verstellung des Systemwahlhebels in die Lageposition eine Sollwertverstellung über die am Heck des Schleppers angebrachte Fernbetätigung möglich ist.

Zur Erreichung der vom Gesetzgeber geforderten stufenweisen bzw. getakteten Betätigung des Krafthebers über die Fernbetätigung weist der Handhebel eine Begrenzung auf. Die Schwenkbarkeit des Handhebels zwischen den Begrenzungspunkten stellt die maximale Verstellmöglichkeit des Krafthebers über die Fernbetätigung dar. Eine darüber hinausgehende Kraftheberverstellung erfordert ein Zurückschwenken des Handhebels in die Ausgangsposition.

In einer Ausgestaltung der Erfindung ist vorgesehen, daß die Servoeinrichtung ein Stellglied aufweist, das in Abhängigkeit eines vom Handhebel ausgelösten Signals bzw. Schaltimpulses den Systemwahlhebel in die Lageposition verschwenkt. Der Handhebel ist dazu mit einem Schalter versehen, der beispielsweise als Taster ausgebildet ist und über den ein elektrischer Stromkreis geschlossen werden kann zur Auslösung der Fernbetätigung.

Als Kuppeleinrichtung bietet es sich an, einen Hubmagneten vorzusehen, zur wahlweisen Verbindung der Übertragungsglieder des Sollwerthebels mit denen des Handhebels. Die Verwendung eines Hubmagneten gestattet einen einfachen und wirkungsvollen Schaltungsaufbau, bei dem vorteilhaft erfindungsgemäß der Hubmagnet nur in der Lageposition des Systemwahlhebels bestrombar ist und damit eine Vorbedingung schafft zur Auslösung einer Fernbetätigung des Sollwerthebels durch den Handhebel und als weitere Voraussetzung der am Handhebel angeordnete Taster betätigt werden muß.

Als erfindungsgemäße Ausgestaltung ist vorgesehen, als Stellglied einen elektrisch betriebenen Stellmotor bzw. ein hydraulisch wirkendes Stellglied einzusetzen. Der Aufbau der Erfindung gestattet darüber hinaus auch weitere Stellglieder, die beispielsweise elektromagnetisch wirken.

Die Schaltung der Fernbetätigung ist so aufgebaut, daß der Hubmagnet nur dann bestromt ist, wenn der am Handhebel befestigte Schalter bzw. Taster betätigt ist. Durch diese Anordnung kann die Fernbetätigung nur erfolgen, wenn zumindest eine Hand der Bedienungsperson am Handhebel angreift.

Die erfindungsgemäße Ausgestaltung der Fernbetätigung, bei der ein Handhebel zur Verstellung des Sollwerthebels mit einem elektrischen Taster kombiniert ist und der maximale Stellweg des Handhebels begrenzt ist, ergibt sich vorteilhaft eine schrittweise Betätigung des Krafthebers in Richtung Heben bzw. Senken. Durch eine entsprechende Anordnung der Begrenzung für den Stellweg des Handhebels in Abstimmung mit der Hebelübersetzung zum Sollwerthebel ist vorteilhaft, die Wegbegrenzung des Krafthebers entsprechend der EG-Richtlinie 86/415,.2.4.2.2.2 einzuhalten, die für die Fernbetätigung einen maximalen Stellweg von 100 mm je Betätigung vorschreibt.

Zur Erreichung einer zuverlässig wirkenden Fernbetätigung, die ausschließlich bei vorgewählter Lageregelung einsetzbar ist, ist mit Hilfe des Handhebels ein Stromkreis schließbar, durch den wirkungsvoll mit Hilfe von Übertragungsgliedern eine formschlüssige Verbindung zur Übertragung der Stellbewegung des Handhebels auf den Sollwerthebel möglich ist. Der elektrische Schaltkreis sieht dazu einen Endschalter vor, der in Schließstellung gebracht wird, sobald sich der Systemwahlhebel in der Stellung für die Lageregelung befindet. Der erfindungsgemäße Handhebel ist weiter mit einem Taster versehen, der für eine Hubbewegung betätigt werden muß, wodurch sich ein Stromkreis schließt mit der Folge, daß ein Hubmagnet beaufschlagt, d.h. bestromt wird.

Der Hubmagnet befindet sich dabei vorteilhaft drehbar angeordnet auf der zu verstellenden Stellwelle und ist über einen Hebemechanismus mit dem Handhebel unmittelbar verbunden. Bei nicht betätigtem Taster wird zur Erreichung der maximalen Hubbewegung der Handhebel bis zu einem der beiden Anschläge verschwenkt. Durch ein anschließendes Betätigen des Tasters und der damit verbundenen Bestromung des Hubmagneten erfolgt über einen Raststift eine formschlüssige Verbindung zwischen dem Hubmagneten und einer Arretierscheibe, welche starr mit der zu verdrehenden Stellwelle verbunden ist. Die Hubbewegung des Krafthebers endet mit dem Erreichen des Handhebels an der gegenüberliegenden Begrenzung.

Weitere Merkmale der Erfindung ergeben sich aus der nachfolgenden Figurenbeschreibung, in der ein Ausführungsbeispiel der Erfindung schematisch dargestellt ist.

Es zeigt:
Fig. 1: in einer Seitenansicht den Aufbau der erfindungsgemäßen Fernbetätigung,
Fig. 2: in einer Seitenansicht Details, insbesondere den Hubmagnetanbau der Fernbetätigung gem. Fig. 1,
Fig. 3: in einer vergrößerten Darstellung das Zusammenwirken der Übertragungsglieder und Verbindungsgestänge mit den Stellwellen sowie dem Hubmagneten.

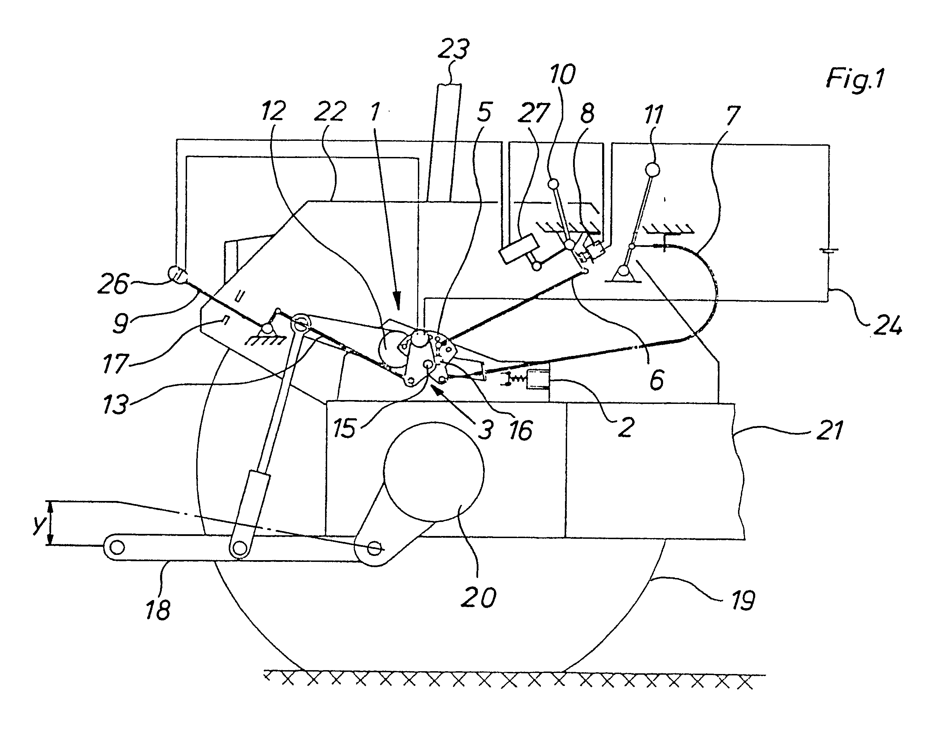

Figur 1 zeigt den Kraftheber (1), der auf dem Getriebegehäuse (21) eines Traktors angebaut ist, von dem weiter nur die Außenkontur des Hinterrades (19) mit der Hinterachse (20) sowie ein Kotflügel (22) verbunden mit einem Kabinenrahmen (23) dargestellt ist. Der Kraftheber (1) ist verbunden mit einer Regelventilanordnung (2) und einer Verstelleinrichtung (3), mit der zum einen die Regelungsart vorgewählt werden kann und zum anderen die Position der mit dem Kraftheber (1) verbundenen Unterlenker (18) veränderlich ist. Zur Betätigung des Krafthebers (1) dient ein Systemwahlhebel (10) sowie ein Sollwerthebel (11), die aus Ergonomiegründen in unmittelbarer Nähe der Fahrersitzposition, beispielsweise seitlich zwischen dem Fahrersitz und dem Kotflügel (22) angeordnet sind. Zur Übertragung der mit dem Systemwahlhebel (10) bestimmbaren Regelungsart dient ein Übertragungsglied (6) zur Verstellung der Stellwelle (16). Eine mit dem Sollwerthebel (11) erreichbare Sollwertänderung wird durch ein Übertragungsglied (7) auf die Stellwelle (15) der Regelventilanordnung (2) übertragen. Über den Handhebel (9), der als Winkelhebel ausgebildet und am Kotflügel (22) drehbar gelagert ist, ist ebenfalls eine Sollwertänderung des Krafthebers (1) möglich, sobald der Systemwahlhebel (10) in die entsprechende Stellung für die Lageregelung gebracht ist.

Der Aufbau der Fernbetätigung sieht eine Servoeinrichtung vor, die einen Stromkreis (24) aufweist, mit dem der Taster (26) des Handhebels (9) und weiter das am Systemwahlhebel (10) befindliche Stellglied (27) und der Endschalter (8) sowie der Hubmagnet (12) im Bereich der Regelventilanordnung (2) betätigt wird. Die Schaltung sieht vor, daß durch das Betätigen des Tasters (26) der Systemwahlhebel (10) über das Stellglied (27) in die Lageposition verschwenkt und bei Erreichen dieser Lage der Stromkreis (24) über den Endschalter (8) geschlossen wird zur Bestromung des Hubmagneten (12). Über den Hubmagneten (12), der unmittelbar über ein Verbindungsgestänge (13) mit dem Handhebel (9) verbunden ist, kann durch eine Bestromung eine formschlüssige Verbindung zu den Übertragungsgliedern zum Sollwerthebel (11) hergestellt werden.

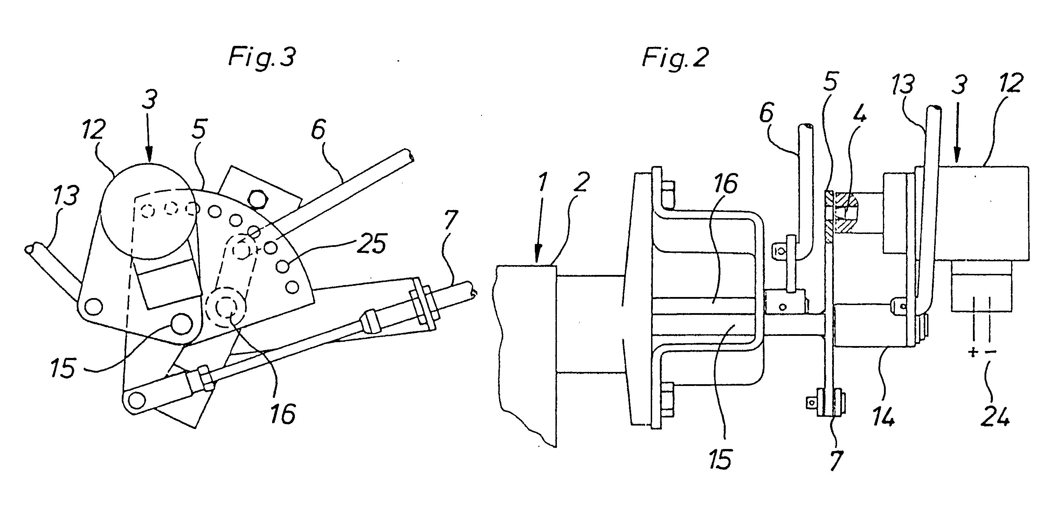

Wie in Figur 2 dargestellt ist der Hubmagnet (12) über ein Drehlager (14) auf der Stellwelle (15) der Verstelleinrichtung drehbar gelagert, wobei der Hubmagnet (12) über ein Verbindungsgestänge (13) mit dem Handhebel (9) verbunden ist. Durch die Bestromung des Hubmagneten (12) wird ein Raststift (4) aus dem Hubmagneten ausgefahren und rastet bei Übereinstimmung der Position einer Bohrung eines Lochbildes, das mit einem Radius auf der Arretierscheibe (5) angeordnet ist, der übereinstimmt mit dem Schwenkradius des Hubmagneten (12). So lange der Taster (26) des Handhebels (9) betätigt wird, besteht eine formschlüssige Verbindung zwischen der Stellwelle (15) und dem Handhebel (9), wodurch eine Sollwertänderung der Unterlenker (18) einer für Ackerschlepper üblichen Dreipunkt-Hydraulik durch eine am Traktorheck befindliche Betätigungseinrichtung möglich wird. Eine schrittweise Lageänderung der Hebearme des Krafthebers (1) wird erzielt durch die Begrenzung (17), die den Betätigungsweg des Handhebels (9) in beiden Richtungen eingrenzt. Die Begrenzung (17) hat zur Folge, daß über den Handhebel (9) lediglich ein schrittweises Anheben bzw. Absenken der Unterlenker (18) möglich ist. Es muß für jeden neuen Hubvorgang der Taster (26) gelöst, anschließend der Handhebel (9) in die entgegengesetzte Position gebracht werden mit der Folge einer Positionsänderung des Hubmagneten (12) zur Arretierscheibe (5). Nach erneuter Tasterbetätigung kann dann erneut eine Lageänderung der Unterlenker (18) innerhalb des Stellweges der Begrenzung (17) vorgenommen werden. Durch eine entsprechende Hebelübersetzung sowie eine dazu abgestimmte Begrenzung (17) ist somit eine Einhaltung der EG-Richtlinie möglich, die für an Ackerschlepper angebrachte Fernbetätigungen für Kraftheber lediglich eine getaktete Hubänderung von maximal 100 mm am Ende der Unterlenker (18) (siehe Maß Y) in einem Schritt zuläßt.

**Patentansprüche**

1.  Vorrichtung zum Betätigen eines hydraulischen Krafthebers für ein Fahrzeug, insbesondere landwirtschaftlich eingesetzte Ackerschlepper, deren Aufbau eine Regelventilanordnung für eine Lage- und zumindest Zugkraftregelung vorsieht, die von schwenkbar gelagerten, im Bedienungsbereich einer Fahrersitzanordnung befindlichen Verstellhebeln, vorzugsweise einem Systemwahlhebel sowie einem Sollwerthebel betätigbar sind, wobei zusätzlich eine Fernbetätigung für den Sollwerthebel zur Lageregelung des Krafthebers entfernt von der Fahrersitzanordnung am Fahrzeug vorgesehen ist, dadurch gekennzeichnet, daß die Fernbetätigung einen schwenkbar gelagerten, mit einem Schalter versehenen Handhebel (9) umfaßt, dessen Stellweg zumindest eine Begrenzung (17) aufweist, und daß der Schalter Teil einer Servoeinrichtung ist, die weiter einen mit dem Systemwahlhebel (10) in Wirkverbindung stehenden Endschalter (8) und eine Kuppeleinrichtung zum wahlweisen Verbinden der Fernbetätigung mit den Übertragungsgliedern des Sollwerthebels (11) aufweist, wobei der Endschalter (8) in der Lageposition des Systemwahlhebels (10) die Betätigung der Servoeinrichtung ermöglicht.

2.  Vorrichtung nach Anspruch 1, dadurch gekennzeichnet, daß die Servoeinrichtung ein Stellglied (27) aufweist, mit dem der Systemwahlhebel (10) in die Position der Lageregelung verdrehbar ist.

3.  Vorrichtung nach Anspruch 1, dadurch gekennzeichnet, daß der Handhebel (9) mit einem Taster (26) als Schalter versehen ist, mit dem die Schaltung geschlossen werden kann zur Auslösung der Fernbetätigung.

4.  Vorrichtung nach Anspruch 1, dadurch gekennzeichnet, daß die Kuppeleinrichtung als ein Hubmagnet (12) ausgebildet ist.

5.  Vorrichtung nach Anspruch 2, dadurch gekennzeichnet, daß die Servoeinrichtung ein hydraulisch wirkendes Stellglied aufweist.

6.  Vorrichtung nach Anspruch 2, dadurch gekennzeichnet, daß eine elektromechanische Fernbetätigung vorgesehen ist, wobei als Stellglied (27) ein elektrisch betriebener Stellmotor dient.

7.  Vorrichtung nach einem der vorhergehenden Ansprüche, dadurch gekennzeichnet, daß der Hubmagnet (12) in der Lageposition des Systemwahlhebels (10) über einen Endschalter (8) bestrombar und über den Taster (26) am Handhebel (9) mit dem Sollwerthebel (11) bzw. mit einem seiner Übertragungsglieder kuppelbar ist.

8.  Vorrichtung nach einem der vorhergehenden

Ansprüche,
dadurch gekennzeichnet, daß die Bestromung des Hubmagneten (12) ausschließlich bei betätigtem Taster (26) erfolgt.

9. Vorrichtung nach einem der vorhergehenden Ansprüche,
dadurch gekennzeichnet, daß der Hubmagnet (12) über ein Drehlager (14) auf einer Stellwelle (15) drehbar angeordnet und bei einer Bestromung mit einer Arretierscheibe (5) formschlüssig verbindbar ist.

Fig.1

EP 0 442 279 A1

Fig.2

Fig.3

**Europäisches Patentamt**

# EUROPÄISCHER RECHERCHENBERICHT

Nummer der Anmeldung

**EP 91 10 0573**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-C-3 804 467 (J I CASE GmbH) <br> * Insgesamt * <br> – – – | 1,3,4,7-9 | A 01 B 63/111 <br> G 05 G 11/00 <br> G 05 G 7/10 <br> B 62 D 49/02 |
| A | DE-A-2 055 403 (XAVER FENDT & CO.) <br> * Seite 10, Zeile 23 - Seite 11, Zeile 11; Figur 4 * <br> – – – | 1,2,6 | |
| A | EP-A-0 216 321 (DEERE & COMPANY) <br> * Spalten 6-11; Figuren 1,3 * <br> – – – | 1,3,6 | |
| A | EP-A-0 066 380 (MASSEY FERGUSON SERVICES N.V.) <br> * Anspruch; Figur 1 * <br> – – – – – | 1 | |

**RECHERCHIERTE SACHGEBIETE (Int. Cl.5)**

A 01 B
G 05 G
B 62 D

Der vorliegende Recherchenbericht wurde für alle Patentansprüche erstellt

| Recherchenort | Abschlußdatum der Recherche | Prüfer |
|---|---|---|
| Den Haag | 24 Mai 91 | ECCETTO M. |